# FASCICULE DE BREVET EUROPEEN

(11) **EP 3 111 121 B1**
(45) Date de publication et mention de la délivrance du brevet: **24.06.2020**
(21) Numéro de dépôt: 15712532.9
(22) Date de dépôt: 20.02.2015
(51) Int. Cl.: F16K 11/074, F16K 11/14, B01L 3/00, G01N 33/48, G01N 1/20

(54) **VANNE D'ÉCHANTILLONNAGE ROTATIVE ET DISPOSITIF ÉQUIPÉ D'UNE TELLE VANNE**
ROTIERENDES PROBEENTNAHMEVENTIL UND VORRICHTUNG MIT SOLCH EINEM VENTIL
ROTARY SAMPLING VALVE AND DEVICE EQUIPPED WITH SUCH A VALVE

(30) Priorité: 28.02.2014 FR 1451635
(43) Date de publication de la demande: 04.01.2017
(73) Titulaire: Horiba ABX SAS, 34184 Montpellier (FR)
(72) Inventeur: HENON, Nathalie, F-30730 Fons-Outre-Gardon (FR); BEAUDUCEL, Florent, F-34000 Montpellier (FR)
(74) Mandataire: IPAZ
(86) Numéro de dépôt international: PCT/EP2015/053632
(87) Numéro de publication internationale: WO 2015/128262

(56) Documents cités:
- FR-A1- 2 924 804
- US-A- 4 726 237
- US-B1- 6 662 826

## Description

La présente invention concerne une vanne d'échantillonnage et un dispositif équipé d'une telle vanne, par exemple mais de manière non limitative un dispositif pour effectuer des mesures hématologiques et/ou biochimiques à partir d'un échantillon biologique.

### Etat de la technique antérieure

La réalisation de mesures hématologiques et/ou biochimiques dans des machines nécessite d'échantillonner l'échantillon biologique, par exemple l'échantillon sanguin prélevé sur les patients. L'échantillonnage permet de calibrer des volumes de sang, appelés aliquotes. Ces aliquotes sont alors mélangées à différents réactifs permettant de révéler des constituants du sang lors des analyses. Les volumes de sang doivent être calibrés précisément et de façon répétable afin de sécuriser les mesures.

On connaît plusieurs types de dispositifs pour réaliser les aliquotes, notamment des vannes d'échantillonnage. On peut citer par exemple le document US 4 726 237 A.

Une vanne d'échantillonnage peut fonctionner de façon isolée ou être intégrée dans une machine d'analyse.

Les machines d'analyse automatisées équipées de telles vannes permettent un fonctionnement à des cadences élevées, de l'ordre par exemple d'une mesure par minute.

Les vannes d'échantillonnage connues permettent typiquement de fractionner un échantillon biologique dans des boucles disposées sur des pièces externes fixes relativement à une pièce interne mobile en rotation. On peut citer par exemple les documents WO 90/07702 A1, WO 2004/034034 A1, FR 2924804 A1, ou US 4 948 565.

Typiquement, les volumes de sang sont calibrés soit dans des boucles, soit dans des chambres situées dans une pièce.

Les mélanges des aliquotes de sang avec des réactifs sont typiquement transférés vers des canaux de sortie en s'écoulant dans des orifices et des rainures formées dans une pièce.

La présence de rainures se traduit par un encrassement, des bouchages et des coincements de la vanne d'échantillonnage.

De plus, l'entraînement en rotation de pièces rotatives est typiquement réalisé avec un moteur pas à pas ou une transmission à vis avec un arrêt sans butée solide ce qui présente un risque de perte de positionnement de la position angulaire relative des pièces.

Les pièces des vannes connues sont serrées les unes contre les autres pour leur étanchéité mutuelle. De plus, la rotation unilatérale de la pièce interne s'accompagne d'une force importante non équilibrée sur la butée qui se dégrade au cours du temps. Ceci contribue aux risques de déréglage.

Ces inconvénients nécessitent des opérations de maintenance régulières et un réglage complexes qui augmentent les coûts d'exploitation et de fabrication.

La présente invention a pour but principal de pallier tout ou partie des inconvénients des vannes d'échantillonnage de l'art antérieur.

Un autre but de la présente invention est de proposer une vanne d'échantillonnage réalisant simultanément des micro-aliquotes ayant des volumes différents.

Encore un autre but de la présente invention est de proposer une vanne d'échantillonnage à éléments rotatifs permettant de simplifier les réseaux de boucles, de canaux et de capillaires.

La présente invention a également pour but de proposer une vanne d'échantillonnage permettant un serrage uniforme et reproductible de ses éléments.

Un autre but de la présente invention est de proposer une vanne d'échantillonnage répartissant les efforts de rotation de ses éléments.

La présente invention a encore pour but de proposer une vanne d'échantillonnage empêchant toute perte de positionnement.

### Exposé de l'invention

Ces buts sont atteints avec une vanne d'échantillonnage telle que définie dans la revendication 1.

La mobilité de deux pièces au lieu d'une seule permet selon les modes de réalisation et les situations pratiques rencontrées d'obtenir différents avantages.

Il est possible de réaliser davantage d'états fonctionnels dans lesquels les deux pièces rotatives sont en butée, donc sans problèmes de réglages.

La rotation de deux pièces externes présente l'avantage de répartir les forces mécaniques s'appliquant sur les pièces de la vanne. En particulier, un actionnement simultané des pièces externes dans un sens de rotation opposé annule sensiblement les couples subis par la pièce interne. Une telle répartition mécanique présente également l'avantage d'optimiser l'étanchéité de la vanne. En outre, la rotation de deux pièces externes permet de simplifier les réseaux de boucles, de canaux et d'orifices de la vanne, par exemple en diminuant le nombre de boucles et d'orifices, tout en permettant d'augmenter le nombre de configurations fonctionnelles possibles.

Le déplacement en rotation des pièces externes, lesquelles supportent des tétons d'entrée et de sortie des fluides (ex. aliquotes de sang, réactifs) circulant ou stockés dans la vanne, permet notamment de décaler les entrées et les sorties les unes par rapport aux autres, en particulier dans un état de dispense (voir plus loin).

Suivant des modes de réalisation, les pièces rotatives de la vanne selon l'invention peuvent :
- être actionnées simultanément,
- être simultanément actionnées dans des sens de rotation opposés,
- être actionnées séparément l'une de l'autre.

La vanne d'échantillonnage est caractérisée en ce que :
- la position angulaire des pièces rotatives est commandée par un actionneur linéaire par l'intermédiaire de moyens de transmission qui sont en prise avec lesdites pièces rotatives en des points différents autour de l'axe de rotation ;
- les moyens de transmission comprennent de préférence un étrier dont une partie centrale est reliée à l'actionneur linéaire, ledit étrier comprenant de préférence deux bras, chaque bras dudit étrier étant relié à l'une respective des pièces rotatives ;
- une première extrémité de chaque bras est solidaire d'une partie mobile en translation de l'actionneur linéaire, la partie mobile étant de préférence un piston, et une deuxième extrémité de chaque bras est en prise avec une seule des pièces rotatives ;
- la deuxième extrémité respective de chaque bras de l'étrier est en prise avec une pièce rotative respective de sorte que l'étrier enserre les pièces rotatives de manière à entraîner les pièces rotatives en rotation par déplacement en translation de la partie mobile de l'actionneur linéaire ;

Suivant des modes de réalisation, la vanne d'échantillonnage est caractérisée en ce que :
- les points de liaison entre les moyens de transmission et les pièces rotatives comprennent une encoche à la périphérie de l'une au moins desdites pièces rotatives ;
- la périphérie de l'une des pièces comprend un évidement permettant une extraction axiale sans interférence avec les moyens de transmission ;
- l'actionneur comprend un piston pneumatique ;
- notamment, lorsque les moyens de rotation comprenne l'étrier précité, le piston pneumatique ou autre actionneur linéaire est de préférence monté radialement par rapport à l'axe de rotation ;
- dans l'une au moins des positions angulaires relatives, des moyens de butée définissent la position angulaire des pièces rotatives ;
- les moyens de butée comprennent un élément de butée qui s'étend axialement dans des lumières traversant les pièces rotatives avec un jeu angulaire autour de l'axe de rotation ;
- elle comprend un système de compression mettant les pièces en appui axial mutuel.

L'actionnement des pièces rotatives de la vanne par un actionneur linéaire tel qu'un piston pneumatique et dans des modes de réalisation dans lesquels une plusieurs positions angulaires de ces pièces rotatives sont réalisées par une butée mécanique permet d'éviter tout risque de perte de positionnement tout en autorisant l'utilisation d'un unique actionneur. La réalisation d'un serrage axial par un système de compression axial, dont le serrage est calibré par exemple par un ressort, permet de réaliser un serrage uniforme et reproductible des pièces de la vanne.

Il est avantageux que dans certains au moins des états fonctionnels, de préférence dans tous les états fonctionnels, les pièces soient en butée les unes par rapport aux autres en ce qui concerne leur position angulaire relative.

Dans la suite, on désignera par « vanne du type spécifié » une vanne d'échantillonnage comprenant deux pièces externes, une pièce interne enserrée entre lesdites pièces externes, et des moyens pour régler la position angulaire relative desdites pièces autour d'un axe de rotation, ladite pièce interne ayant des surfaces opposées appuyées de façon étanche et glissante sur des surfaces adjacentes desdites pièces externes, lesdites pièces externes comprenant des orifices, des boucles et des canaux, lesdites boucles et lesdits canaux étant agencés pour communiquer sélectivement avec des orifices traversant ladite pièce interne.

Suivant un deuxième aspect de l'invention, dans une vanne du type spécifié, en particulier mais non limitativement conforme au premier aspect, dans laquelle une rotation relative des pièces à partir d'un état fonctionnel de prélèvement isole des volumes calibrés de liquide prélevé puis lorsqu'un état fonctionnel de dispense est atteint met ces volumes calibrés en liaison avec des circuits de dispense, la vanne est caractérisée en ce que certains desdits volumes calibrés sont définis dans une ou plusieurs boucles et calibrées par la contenance desdites une ou plusieurs boucles et d'autres volumes calibrés sont définis dans un ou plusieurs orifices de la pièce interne et calibrées par la contenance desdits un ou plusieurs orifices de ladite pièce interne.

Dans un premier mode de réalisation suivant un troisième aspect de l'invention, dans une vanne du type spécifié, notamment conforme au premier aspect, la vanne est caractérisée en ce que :
- les orifices, les boucles et les canaux des pièces externes, et les orifices traversant la pièce interne sont agencés pour définir par leurs positions angulaires relatives deux états fonctionnels distincts :
   ∘ un état de prélèvement ou de rinçage dans lequel plusieurs desdites boucles sont reliées, par plusieurs desdits orifices de ladite pièce interne et plusieurs desdits orifices desdites pièces externes, à au moins un canal d'entrée et à au moins un canal de sortie,
   ∘ au moins un état de dispense dans lequel une série de boucles sont des boucles d'échantillonnage de volume calibré et sont reliées, chacune séparément, par plusieurs desdits orifices de ladite pièce interne et plusieurs desdits orifices desdites pièces externes, à au moins un canal d'entrée et à au moins un canal de sortie ;
   ou en ce que
- les orifices, les boucles et les canaux des pièces externes, et les orifices traversant la pièce interne sont agencés pour définir par leurs positions angulaires relatives deux états fonctionnels distincts :
   ∘ un état de prélèvement ou de rinçage dans lequel plusieurs desdites boucles sont reliées, par plusieurs desdits orifices de ladite pièce interne et plusieurs desdits orifices desdites pièces externes, à au moins un canal d'entrée et à au moins un canal de sortie,
   ∘ un état de dispense dans lequel au moins un desdits orifices de ladite pièce interne est une chambre d'échantillonnage de volume calibré et est directement relié, par des orifices desdites pièces externes, à au moins un canal d'entrée et à au moins un canal de sortie.

Suivant ce deuxième et ce troisième aspects de l'invention, et en particulier dans le mode de réalisation qui vient d'être exposé, les aliquotes peuvent être constituées soit dans les boucles, soit dans les chambres réalisés par des orifices de la pièce interne, soit à la fois dans ces boucles et dans ces chambres. Les volumes ainsi constitués peuvent ainsi répondre à des critères de calibration différents selon le type d'analyses à réaliser. Cela permet par conséquent de combiner les analyses utilisant par exemple des volumes provenant des boucles et des micro-volumes provenant de chambres. Un tel mode de réalisation permet en outre d'optimiser la consommation de diluant et de réactifs.

De plus, une vanne réalisée suivant un tel mode de réalisation permet de s'affranchir de rainures de communication entre les boucles ce qui limite les risques de bouchage et d'encrassement.

Dans un deuxième mode de réalisation suivant le troisième aspect de l'invention, les orifices, les boucles et les canaux des pièces externes, et les orifices traversant la pièce interne sont agencés pour définir en outre par leur position angulaire relative :
- un état de dispense secondaire dans lequel une deuxième série desdites boucles sont des boucles d'échantillonnage de volume calibré et sont reliées, chacune séparément, par plusieurs desdits orifices de ladite pièce interne et plusieurs desdits orifices desdites pièces externes, à au moins un canal d'entrée et à au moins un canal de sortie ;
   ou
- un état de dispense secondaire reliant directement au moins un desdits orifices de ladite pièce interne, par des orifices desdites pièces externes, à au moins un canal d'entrée et à au moins un canal de sortie, ledit au moins un desdits orifices de ladite pièce interne étant une chambre d'échantillonnage de volume calibré.

De préférence, une telle vanne est caractérisée en ce que les pièces externes sont actionnées de façon sélective de sorte que :
- lesdites pièces externes se déplacent dans un sens de rotation opposé ; ou
- l'une desdites pièces externes se déplace dans un sens de rotation suivant l'axe de rotation et l'autre desdites pièces externes ne se déplace pas en rotation suivant ledit axe de rotation.

Une vanne selon ce deuxième mode de réalisation suivant le troisième aspect de l'invention permet de conserver au moins une boucle de secours et/ou au moins une chambre de secours dans la pièce interne permettant de réaliser une mesure de vérification supplémentaire sans re-prélèvement.

Cet avantage est notamment pertinent lorsque la vanne d'échantillonnage est par exemple comprise dans une machine d'analyses autorisant des cadences d'échantillonnage élevées.

Dans un troisième mode de réalisation suivant le troisième aspect de l'invention, les orifices, les boucles et les canaux des pièces externes, et les orifices traversant la pièce interne sont agencés pour définir par leurs positions angulaires relatives un quatrième état fonctionnel, à savoir, en plus des trois états fonctionnels du deuxième mode de réalisation, un état de prélèvement secondaire ou de rinçage secondaire dans lequel plusieurs desdites boucles, dont certaines sont communes avec lesdites boucles dudit état de prélèvement primaire, sont reliées, par plusieurs desdits orifices de ladite pièce interne et plusieurs desdits orifices desdites pièces externes, à au moins un canal d'entrée et à au moins un canal de sortie.

De préférence, une telle vanne est caractérisée en ce que les pièces externes sont actionnées de façon sélective de sorte que :
- lesdites pièces externes se déplacent dans un sens de rotation identique ; ou
- lesdites pièces externes se déplacent dans un sens de rotation opposé ; ou
- l'une desdites pièces externes se déplace dans un sens de rotation suivant l'axe de rotation et l'autre desdites pièces externes ne se déplace pas en rotation suivant ledit axe de rotation.

Une vanne selon ce troisième mode de réalisation suivant le troisième aspect de l'invention permet de constituer deux circuits de prélèvement fonctionnant en parallèle au sein de la même vanne.

En outre, elle permet de réaliser une mesure de vérification supplémentaire sans re-prélèvement.

Ces avantages sont notamment pertinents lorsque la vanne d'échantillonnage est par exemple comprise dans une machine d'analyses autorisant des cadences d'échantillonnage élevées.

De préférence, dans tous les modes de réalisation du troisième aspect, l'un au moins desdits états de dispense relie en outre directement au moins un des orifices de la pièce interne, par des orifices des pièces externes, à au moins un canal d'entrée et à au moins un canal de sortie, ledit au moins un desdits orifices de ladite pièce interne étant une chambre d'échantillonnage de volume calibré.

La vanne selon l'invention permet de s'affranchir de toute rainure ou creusure formée dans l'une ou plusieurs pièces de la vanne. Ainsi, on évite de créer des zones de turbulence et on évite en conséquence l'encrassement et le bouchage de la vanne.

Une vanne d'échantillonnage est très sensible aux perturbations des flux de fluides y circulant. L'absence de zones de turbulence est primordiale pour ne pas engendrer de faux résultats lors de l'utilisation de la vanne. Pour cette raison, il est particulièrement avantageux que la vanne ne contienne aucune zone de turbulence telle que des creusures (ou chicanes de renvoi d'aliquote en sens opposé) dans les canaux dans lesquels circule typiquement du sang lysé (cellules éclatées) car les protéines que contient ce sang lysé s'accrochent dans les coins et peuvent se déposer de manière définitive, entraînant par exemple un encrassement ou un relargage de particules étrangères au contenu d'aliquotes.

Une vanne d'échantillonnage est aussi très sensible aux variations de diamètre des canaux internes (pertes de charge). Il faut ainsi éviter toute variation de diamètre telle que réalisée par des creusures (chicanes de renvoi d'aliquote) dans les canaux dans lesquels circulent des réactifs car un phénomène de dégazage du réactif se produit dans les zones de dépression, ce qui entraîne une formation de microbulles (ex. comptage à blanc de cellules fantômes).

De plus, une telle vanne doit être parfaitement nettoyée entre chaque utilisation, typiquement entre deux cycles d'analyse du sang de différents patients. Il faut ainsi éviter des zones dans lesquelles la vitesse d'un fluide s'annule telles que réalisées par la présence de creusures (chicanes de renvoi d'aliquote), le rinçage étant empêché ou peu efficace dans de telles zones.

Il apparaît que la vanne d'échantillonnage selon l'invention permet de répondre à ces contraintes. Pour éviter les creusures et zones de fortes turbulences, les sens de circulation du ou des fluides circulant dans la vanne sont toujours traversant (i.e. pas de « demi-tour » au moyen de creusures), en particulier au niveau de la pièce interne. Ainsi, le ou les fluides circulant ou étant contenus dans la pièce interne de la vanne circulent ou sont contenus dans des orifices traversant cette pièce interne, ces orifices étant de préférence des orifices cylindriques, et étant de préférence perpendiculaire auxdites surfaces opposées appuyées de façon étanche et glissante sur les surfaces adjacentes des pièces externes.

Des applications requièrent de réaliser des aliquotes d'un volume de sang réduit, par exemple inférieur à 5µl de sang, et d'autres aliquotes d'un volume de sang de l'ordre d'une dizaine de microlitres. La mise en œuvre de telles applications pose des contraintes techniques notamment en termes d'encombrement global ou de dimensionnement de la vanne.

La vanne selon l'invention permet de satisfaire à de telles contraintes techniques, par la réalisation de micro-perçages dans la pièce interne et par un dimensionnement de cette pièce interne lui conférant une faible épaisseur, par exemple de l'ordre de quelques millimètres, l'épaisseur de la pièce interne étant de préférence inférieure à 3 mm, de préférence inférieure à 2,5 mm. De préférence, la pièce interne est sensiblement cylindrique et son diamètre est inférieur à 40 mm, de préférence inférieur à 30 mm. De préférence, le volume constitué par lesdits micro-perçages est inférieur à 1 µl, de préférence inférieur à 0,5 µl. Un tel dimensionnement fragilisant cette pièce interne, en particulier lorsque cette pièce interne est en céramique, la solution consistant à mettre en rotation les pièces externes est particulièrement avantageuse.

De préférence, l'épaisseur des pièces externes est inférieure à 6 mm, de préférence inférieure à 4,5 mm. De préférence, les pièces externes sont sensiblement cylindriques et leur diamètre est inférieur à 45 mm, de préférence inférieur à 35 mm.

En outre, la vanne selon l'invention permet aussi de satisfaire en partie des contraintes techniques précitées par la constitution de volumes de sang plus important, par exemple de l'ordre d'une dizaine de microlitres, dans les boucles d'échantillonnage. De préférence, des boucles d'échantillonnage ont un diamètre intérieur inférieur à 2 mm, de préférence inférieur à 1 mm. De préférence, le volume constitué par au moins une partie des boucles d'échantillonnage est inférieur à 35 µl, de préférence inférieur à 25 µl. Afin de respecter les tolérances de fabrication des boucles aptes à calibrer précisément les aliquotes qui y sont constituées, on réalise typiquement les boucles d'échantillonnage avec des tubes métalliques, les tubes en plastique n'étant pas appropriés.

Dans un mode de mise en œuvre de la vanne d'échantillonnage selon l'invention, on met en œuvre simultanément du sang humain et au moins quatre réactifs différents ayant différentes propriétés typiquement préjudiciables à la fois pour les échantillons sanguins, pour les autres réactifs et/ou pour la vanne d'échantillonnage. Toutes les distributions se font simultanément. En particulier, tous les volumes de sang sont prélevés en une seule fois, c'est-à-dire dans une seule position relative des pièces mobiles correspondant à l'état de prélèvement. Dans une autre position, on réalise ensuite une étape de calibration, de distribution et de mélange de ces aliquotes de sang avec le volume approprié de chacun des réactifs respectifs.

La mise en œuvre d'un déplacement rotatif des pièces externes permet d'éviter les coincements et d'avoir une répartition des efforts identiques quelle que soit la position relative des pièces.

L'échantillonnage et la distribution sont réalisés dans un temps très court, de l'ordre de la seconde et il importe que le positionnement des pièces de la vanne soit précis (de l'ordre du micron) et répétable. De plus, pour limiter les opérations de maintenance et augmenter la durée de vie de la vanne (limitation des risques de perte de puissance et de panne), il faut atteindre les différentes positions relatives des pièces mobiles le plus simplement possible.

A ce titre, la vanne selon l'invention permet de répondre avantageusement à de telles contraintes, en particulier par l'utilisation d'un actionneur linéaire, associé à un étrier qui entraîne chaque pièce externe en même temps et en sens opposé autour d'un unique axe de rotation, ou encore par la présence d'un unique ressort pour réaliser un appui uniforme des pièces de la vanne l'une contre l'autre, ou encore par la butée de positionnement unique et robuste limitant les pertes de positionnement.

De préférence, les pièces de la vanne comprennent de la céramique. La céramique permet de rendre la vanne neutre d'un point de vue thermique et chimique pour éviter la corrosion ou la pollution par relargage de particules. La céramique permet en outre d'assurer une bonne planéité des pièces sur les surfaces mettant deux pièces données en contact l'une avec l'autre, et une rugosité très faible.

L'invention concerne également un dispositif d'analyse de paramètres biologiques mettant en œuvre au moins une vanne d'échantillonnage suivant le premier ou le deuxième aspect de l'invention et dans chacun des modes de réalisation qui viennent d'être exposés.

### Liste des figures et description de modes de réalisation

D'autres particularités et avantages de l'invention ressortiront de la description détaillée de modes de réalisation nullement limitatifs et des dessins annexés sur lesquels :
- la FIGURE 1 est une vue en perspective d'une vanne d'échantillonnage selon un mode de réalisation préférentiel de l'invention ;
- la FIGURE 2 est une vue en perspective éclatée d'un ensemble d'échantillonnage, montrant les pièces de la vanne de la FIGURE 1, selon un mode de réalisation préférentiel de l'invention ;
- les FIGURES 3 et 4 sont des représentations schématiques de la vanne de la FIGURE 1 dans deux états fonctionnels distincts :
   ∘ un état de prélèvement ou de rinçage en FIGURE 3,
   ∘ un état de dispense en FIGURE 4 ;
- les FIGURES 5 à 7 illustrent chacune le fonctionnement de la vanne d'échantillonnage dans ses différents états fonctionnels, suivant trois autres modes de réalisation de l'invention ;
- la FIGURE 8 est une vue partielle d'une pièce de la vanne de la FIGURE 1 et représente une distance d'étanchéité.

Ces modes de réalisation n'étant nullement limitatifs, on pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur.

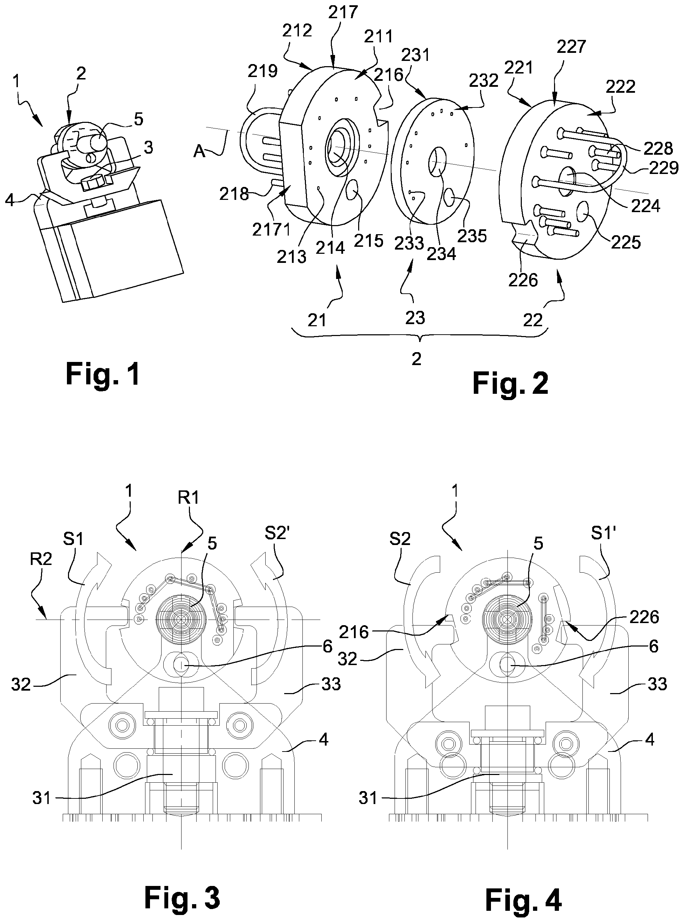

La vanne d'échantillonnage 1 représentée aux figures 1 à 4 comprend un ensemble d'échantillonnage 2, un actionneur 3 et un support 4.

L'ensemble d'échantillonnage 2 comprend deux pièces 21, 22 mobiles en rotation autour d'un axe commun A, appelées pièces rotatives, par rapport à une pièce 23 fixe relativement au support 4. Dans cet exemple de réalisation, les pièces rotatives 21, 22 et fixe 23 ont une forme générale de disques. Elles sont empilées le long de l'axe A et sont en contact deux par deux sur leurs faces de contact mutuel 211, 221, 231, 232 planes et perpendiculaires à l'axe A.

Les pièces rotatives sont les deux pièces externes 21 et 22, placées de part et d'autre de la pièce interne 23.

La pièce interne 23 est traversée par des orifices 233 reliant entre elles les surfaces de contact 231, 232.

Les pièces externes 21, 22 portent des boucles d'échantillonnage 219, 229 et des canaux de dispense et d'évacuation 218, 228 fixés sur leur face externe 212, 222. Les boucles 219, 229 ont chacune deux extrémités qui débouchent à travers la face de contact 211, 221 sur au moins deux orifices 233 de la pièce interne 23. Les canaux 218, 228 ont chacun deux extrémités dont l'une débouche à travers la face de contact 211, 221 sur au moins un orifice 233 de la pièce interne 23.

Les pièces externes 21, 22 et interne 23 de l'ensemble d'échantillonnage 2 comprennent une ouverture centrale 214, 224, 234 permettant d'accueillir un système de serrage 5, par exemple à ressort. Le système de serrage 5 permet de réaliser un serrage central calibré des pièces externes 21, 22 et interne 23 selon l'axe A de rotation des pièces externes 21, 22. Ce serrage fait régner entre les faces de contact une pression suffisante pour rendre étanche le contact entre les faces de contact 211, 231 et 221, 232, en ce sens que du fluide prélevé ou du fluide d'analyse ne peut s'infiltrer en quantités significatives entre les faces de contact. Cependant, les faces de contact ont une rugosité suffisamment faible pour permettre le glissement relatif entre les faces de contact pour la rotation mutuelle des pièces. Cette faible rugosité est favorable à l'étanchéité recherchée.

Les pièces externes 21, 22 de l'ensemble d'échantillonnage 2 comprennent en outre une ouverture excentrée 215, 225, réalisée circulaire dans ce mode de réalisation. La pièce interne 23 comprend également une ouverture excentrée 235, par exemple de forme oblongue selon une première direction radiale R1 de l'ensemble d'échantillonnage 2. Un arbre 6 de forme cylindrique et de diamètre sensiblement identique à la plus petite largeur de l'ouverture excentrée 235 de la pièce interne 23 traverse les ouvertures excentrées 215, 225, 235 des pièces externes 21, 22 et interne 23. Les ouvertures excentrées 215, 225 ont autour de l'axe A une dimension circonférentielle supérieure au diamètre de l'arbre 6, par exemple mais de manière non restrictive d'un facteur 2, de sorte que l'arbre puisse être en contact uniquement sur une arête du logement formé par chacun des orifices excentrés 215, 225 des pièces externes 21, 22. En outre, l'arbre 6 est fixe par rapport au support fixe 4.

Un tel assemblage permet, lorsque les pièces externes 21, 22 et interne 23 sont mises en contact et serrées par le système de serrage 5, d'immobiliser en rotation la pièce interne 23 relativement au support 4 par l'arbre 6, cela en raison du diamètre de l'arbre 6 sensiblement identique à la largeur de l'ouverture excentrée 235 de la pièce interne 23. De plus, le déplacement des pièces externes 21, 22 autour de l'axe de rotation A est limité dans chacun de deux sens de rotation S1, S2 (pièce 22) ou S1', S2' (pièce 21) par l'arbre 6 qui entre en butée avec le logement des orifices excentrés 215, 225. Ainsi, dans chaque état fonctionnel, les trois pièces 21, 22, 23 sont en butée sur une même surface de référence constituée par la paroi latérale de l'arbre 6.

Il est à noter que cette configuration est particulièrement avantageuse pour positionner les pièces rotatives 21, 22 dans une position angulaire relative reproductible.

Dans l'exemple de réalisation représenté en figures 1, 3 et 4, l'actionneur 3 est un actionneur linéaire comprenant un piston 31 déplacé en translation suivant une direction radiale par rapport à l'axe de rotation A, ici la direction radiale R1. Dans l'exemple, cette direction est verticale. L'actionneur est placé en dessous des pièces 21, 22, 23.

Le piston 31 est solidaire d'un étrier d'actionnement comportant deux bras 32, 33 dont les extrémités sont en prise avec des encoches 216, 226 formées dans des flancs 217, 227 des pièces rotatives 21, 22. Dans un mode de réalisation préférentiel, les flancs 217, 227 sont situés de part et d'autre de la direction d'actionnement de l'actionneur 3.

En référence à la figure 3, le déplacement du piston 31 et de l'étrier 32, 33 vers l'ensemble d'échantillonnage 2 (vers le haut de la figure) produit un déplacement en rotation suivant l'axe A dans un premier sens S1 de la pièce externe 22 et dans un deuxième sens S2', opposé au premier sens S1, de la pièce externe 21.

En référence à la figure 4, le déplacement du piston 31 et de l'étrier 32, 33 dans la direction opposée à celle de l'ensemble d'échantillonnage 2 (vers le bas de la figure) produit un déplacement en rotation suivant l'axe A dans le premier sens S1' de la pièce externe 21 et dans le deuxième sens S2' de la pièce externe 22.

Quelle que soit la direction de déplacement du piston 31, l'ampleur de ce déplacement est déterminée par le jeu circonférentiel autour de l'axe A de l'arbre 6 dans les orifices excentrés 215, 225 des pièces externes 21, 22.

Ce mode de réalisation présente l'avantage de répartir les efforts de rotation sur les pièces externes 21, 22, ce qui permet de réduire les risques de coincement. De plus, ce mode de réalisation permet d'actionner les deux pièces externes 21, 22 par un unique actionneur 3 fonctionnant avec un simple piston 31 déplacé en translation, ce qui réduit à la fois l'encombrement et les coûts de fabrication et facilite les étapes de fabrication et de maintenance.

Ce mode de réalisation est également particulièrement avantageux en ce que dans chacun des deux états fonctionnels les trois pièces 21, 22, 23 sont appuyées en butée sur l'arbre 6, autrement dit sur une surface de référence commune, ce qui évite les risques de perte de positionnement des pièces externes 21, 22.

Nous allons maintenant décrire d'autres aspects de l'invention, compatibles avec plusieurs combinaisons de modes de réalisation du premier aspect de l'invention, et concernant notamment l'organisation des réseaux de boucles 219, 229, de canaux 218, 228 et d'orifices 213, 223, 233 des pièces 21, 22, 23 relativement à des positions angulaires relatives des pièces rotatives 21, 22.

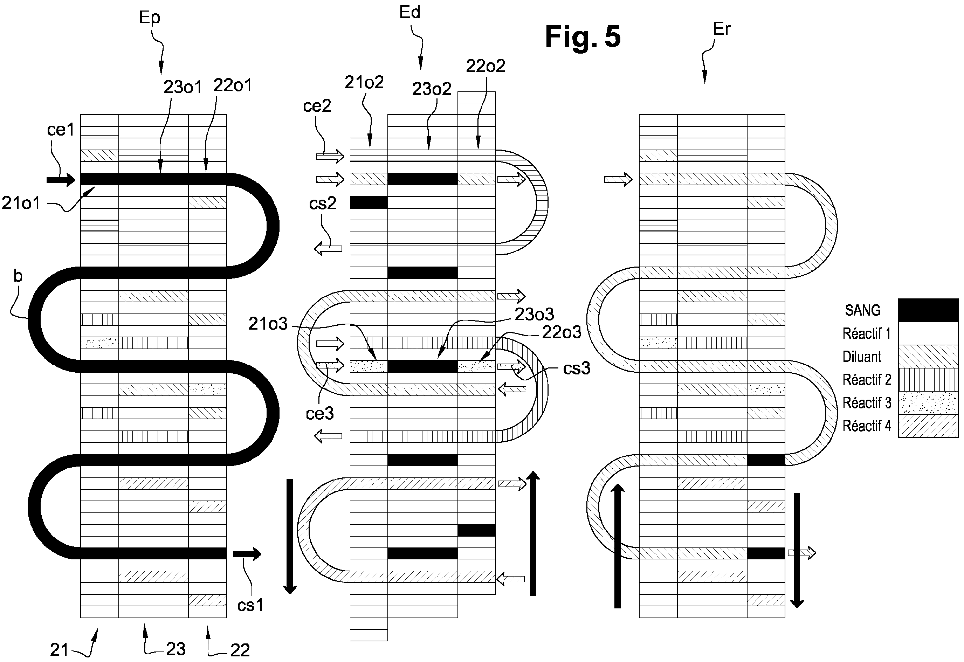

Nous allons décrire en particulier trois modes de réalisation de l'invention en référence aux figures 5 à 7.

Les figures 5 à 7 illustrent le fonctionnement de la vanne d'échantillonnage dans différents états fonctionnels. Pour chaque état fonctionnel on a les pièces 21, 22, 23 de façon déroulée de sorte que leur position angulaire relative est visible sous la forme d'une portion relative selon la direction verticale.

En outre, chaque pièce est subdivisée dans la direction circonférentielle (verticale aux figures 5 à 7) en petits rectangles élémentaires permettant de visualiser la position angulaire relative des pièces 21, 22, 23 de façon schématique.

La série de petits rectangles contenus dans chaque pièce sur les figures 5 à 7 permet également d'illustrer les moyens de communication des boucles, des canaux et des orifices des pièces 21, 22, 23 dans chacun des états fonctionnels représentés. Ainsi, certains petits rectangles (par exemple 21o1, 22o1, 23o1 sur la figure 5) représentent des orifices des pièces 21, 22, 23.

Le mode de réalisation de la figure 5 comprend deux états fonctionnels distincts : (1) un état de prélèvement Ep ou de rinçage Er, ainsi que (2) un état de dispense Ed.

On voit sur la figure 5 que l'état de prélèvement Ep ou de rinçage Er est un seul et même état car la position angulaire relative des pièces 21, 22, 23 est identique. En l'occurrence, les pièces 21, 22, 23 sont représentées dans une position angulaire dite de référence illustrée par un alignement des pièces 21, 22, 23. L'état de prélèvement Ep et l'état de rinçage Er sont représentés séparément afin d'illustrer deux usages possibles de cet état fonctionnel. Dans l'état de prélèvement Ep, un liquide, par exemple un échantillon sanguin, est injecté dans un canal d'entrée ce1 et circule jusqu'à un canal de sortie cs1 en passant par des boucles b et des orifices 22o1, 22o1, 22o3 des pièces 21, 22, 23 qui sont tous en série les uns avec les autres pour former un conduit continue et non ramifié entre les canaux ce1 et cs1. Dans l'état de rinçage Er, un autre liquide, par exemple un diluant, est injecté dans le même canal d'entrée et circule dans les mêmes orifices et boucles jusqu'au canal de sortie permettant de nettoyer ces orifices et boucles. Dans les deux cas, le liquide injecté envahit la totalité du conduit continu formé entre les canaux ce1 et cs1.

L'état de dispense Ed représenté sur la figure 5 est un deuxième état fonctionnel de la vanne d'échantillonnage selon l'invention. Cet état sert typiquement à constituer des aliquotes de sang et à dispenser ces aliquotes avec différentes réactifs afin de réaliser des analyses sur l'échantillon sanguin prélevé.

On voit sur la figure 5 que l'état de dispense Ed est obtenu par un déplacement des pièces externes 21, 22 dans un sens opposé et d'ampleur identique, en l'occurrence visualisé par la hauteur de deux petits rectangles, par rapport à l'état de prélèvement Ep.

Après remplissage notamment des orifices 21o1, 22o1, 23o1 et des boucles b dans l'état de prélèvement Ep, le positionnement rotatif relatif des pièces externes 21, 22 selon l'état de dispense Ed permet de constituer des aliquotes du liquide prélevé dans plusieurs ou toutes les boucles b, dites boucles d'échantillonnage, ainsi que dans des orifices 23o3 de la pièce 23, dits chambres d'échantillonnage. Pour dispenser les volumes de liquide échantillonnés dans les boucles d'échantillonnage, des réactifs sont insérés dans des canaux d'entrée ce2, de façon à pousser les aliquotes en circulant dans des orifices 21o2, 22o2, 23o2 alignés des pièces 21, 22, 23 jusqu'à des canaux de sortie cs2. Pour dispenser les volumes de liquide échantillonnés dans une ou plusieurs chambres d'échantillonnage 23o3, un ou plusieurs réactifs sont insérés dans un ou plusieurs canaux d'entrée ce3, de façon à circuler dans un ou plusieurs orifices 21o3 et 22o3 alignés avec la ou les chambres d'échantillonnage 23o3 jusqu'à un ou plusieurs canaux de sortie cs3.

La réalisation d'aliquotes dans des boucles d'échantillonnage et dans des chambres d'échantillonnage permet d'obtenir deux types de calibrage des volumes de liquide, et de faire, par exemple, de l'échantillonnage standard dans des boucles et du micro-échantillonnage plus précis dans des chambres.

La vanne présente l'avantage de permettre un échantillonnage en utilisant soit ces deux types de calibrage, soit l'un seul à la fois.

Le mode de réalisation qui vient d'être décrit est notamment compatible avec la caractéristique de positionnement angulaire relatif des pièces externes 21, 22 définie par des moyens de butée 6 du premier aspect de l'invention.

En particulier, l'état de prélèvement Ep et de rinçage Er peut être obtenu par l'état de la vanne 1 représenté en figure 3 tandis que l'état de dispense Ed peut être obtenu par l'état de la vanne 1 représenté en figure 4 (voir plus haut pour la description de ces figures).

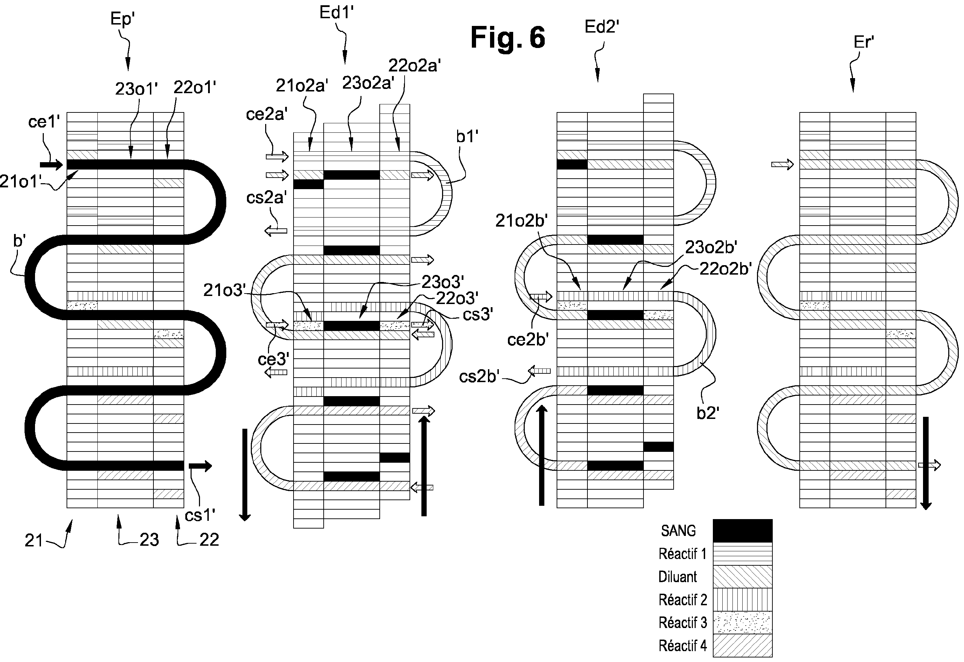

Le mode de réalisation de la figure 6 comprend trois états fonctionnels distincts : (1) un état de prélèvement Ep' ou de rinçage Er', (2) un état de dispense primaire Ed1', ainsi que (3) un état de dispense secondaire Ed2'.

Le fonctionnement et le principe de l'état de prélèvement Ep' ou de rinçage Er' de ce mode de réalisation sont similaires à ceux de l'état de prélèvement Ep ou de rinçage Er du mode de réalisation précédent.

Une particularité de ce mode de réalisation concerne l'existence de deux états de dispense Ed1', Ed2'. Ces états de dispense Ed1', Ed2' sont basés sur le même principe de fonctionnement que l'état de dispense Ed du mode de réalisation précédent (voir plus haut). Ce mode de réalisation prévoit cependant deux réseaux de dispense indépendants ayant chacun leurs propres boucles b1', b2' et/ou chambres 23o3' d'échantillonnage.

Comme le montre la figure 6, chacun des deux états de dispense Ed1', Ed2' est associé à une position angulaire relative des pièces externes 21, 22 obtenue par un déplacement d'ampleur différente pour chacune de ces pièces 21, 22.

Dans l'état de dispense primaire Ed1', les pièces 21, 22 sont déplacées en sens opposé par rapport à l'état de prélèvement Ep' et l'ampleur de ce déplacement est visualisée par la hauteur d'un petit rectangle pour la pièce 21 et de deux petits rectangles pour la pièce 22.

Dans l'état de dispense secondaire Ed2', la pièce rotative 21 est déplacée de façon à retrouver la position de référence de l'état de prélèvement Ep', soit d'une valeur d'un petit rectangle sur la figure 6 par rapport à l'état de dispense primaire Ed1'. Au contraire, dans l'état de dispense secondaire Ed2', la pièce rotative 22 n'est pas déplacée par rapport à l'état de dispense primaire Ed1'.

La configuration qui vient d'être décrite permet d'utiliser, dans l'état de dispense secondaire Ed2', une ou plusieurs boucles d'échantillonnage b2' et des orifices 21o2b', 22o2b', 23o2b' et canaux ce2b', cs2b' correspondants, et/ou une ou plusieurs chambres d'échantillonnage et des orifices et canaux correspondants non utilisés dans l'état de dispense primaire Ed1'.

Réciproquement, cette configuration permet d'utiliser, dans l'état de dispense primaire Ed1', une ou plusieurs boucles d'échantillonnage b1' et des orifices 21o2a', 22o2a', 23o2a' et canaux ce2a', cs2a' correspondants, et/ou une ou plusieurs chambres d'échantillonnage 23o3' et des orifices 21o3', 22o3' et canaux ce3', cs3' correspondants non utilisés dans l'état de dispense secondaire Ed2'.

La présence de deux états de dispense Ed1', Ed2' parallèles présente notamment l'avantage de pouvoir constituer des aliquotes dites de secours, pouvant par exemple être utilisées si les analyses réalisées lors d'une première dispense nécessitaient d'être complétées. Une seconde série d'analyses pourrait ainsi être réalisée sans effectuer de second prélèvement.

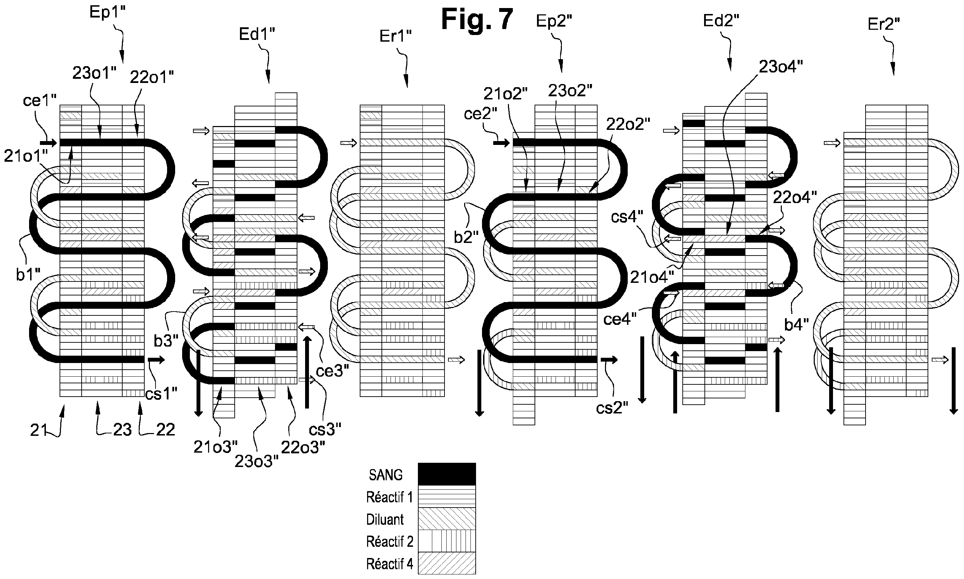

Le mode de réalisation de la figure 7 comprend quatre états fonctionnels distincts : (1) un état de prélèvement primaire Ep1" ou de rinçage primaire Er1", (2) un état de prélèvement secondaire Ep2" ou de rinçage secondaire Er2", (3) un état de dispense primaire Ed1", ainsi que (4) un état de dispense secondaire Ed2".

Ce mode de réalisation est basé sur plusieurs principes similaires aux deux modes de réalisation qui viennent d'être décrits. En particulier, il prévoit deux états de dispense Ed1", Ed2" pour lesquels on pourra se reporter à la description des états de dispense Ed1', Ed2' du mode de réalisation précédent.

La combinaison de l'état de prélèvement primaire Ep1" ou de rinçage primaire Er1" et des états de dispense primaire Ed1" et secondaire Ed2" se rapporte à un mode de réalisation similaire au mode de réalisation précédent.

Une particularité de ce mode de réalisation concerne l'existence d'un second état de prélèvement Ep2" ou de rinçage Er2", parallèle au premier état de prélèvement Ep1" ou de rinçage Er1". Après prélèvement dans l'état de prélèvement primaire Ep1", remplissage des boucles b1" et orifices 21o1", 22o1", 23o1" via des canaux ce1", cs1", et dispense, une pièce rotative 21 est déplacée pour configurer la vanne dans l'état de prélèvement secondaire Ep2" de sorte à permettre un remplissage de boucles b2" et orifices 21o2", 22o2", 23o2" via des canaux ce2", cs2".

Comme représenté en figure 7, une ou plusieurs des boucles b1", b2" et un ou plusieurs orifices 23o1", 23o2" sont différents entre les deux états de prélèvement Ep1", Ep2". Ainsi, un rinçage sera typiquement effectué dans l'état de rinçage primaire Er1" entre le premier prélèvement réalisé dans l'état de prélèvement primaire Ep1" et le second prélèvement réalisé dans l'état de prélèvement secondaire Ep2".

Dans l'état de dispense primaire Ed1", des aliquotes calibrées dans des boucles d'échantillonnage b3" et/ou dans des chambres d'échantillonnage sont dispensées avec des réactifs de la même manière que dans les précédents modes de réalisation.

En outre, l'état de dispense secondaire Ed2" permet de réaliser une nouvelle série d'analyses utilisant les aliquotes prélevées dans l'état de prélèvement secondaire Ep2".

Ainsi, la vanne d'échantillonnage 1 comprend les deux pièces externes 21, 22, la pièce interne 23 enserrée entre lesdites pièces externes 21, 22, et les moyens 3 pour régler la position angulaire relative desdites pièces 21, 22, 23 autour de l'axe de rotation A, ladite pièce interne 23 ayant des surfaces opposées 231, 232 appuyées de façon étanche et glissante sur des surfaces 211, 221 adjacentes desdites pièces externes 21, 22, lesdites pièces externes 21, 22 comprenant des orifices 213, des boucles 219, 229 et des canaux 218, 228, lesdites boucles 219, 229 et lesdits canaux 218, 228 étant agencés pour communiquer sélectivement avec des orifices 233 traversant ladite pièce interne 23. Deux 21, 22 desdites pièces 21, 22, 23 sont rotatives autour dudit axe de rotation A par rapport à l'une 23 desdites pièces 21, 22, 23 qui est fixe.

On définit une distance inter-orifices comme étant, pour tous les orifices 213, 223, 233, la distance minimum entre les contours de deux de ces orifices 213, 223, 233 sur une pièce 21, 22, 23 donnée.

Selon une caractéristique avantageuse, les orifices 213, 223, 233 d'une pièce 21, 22, 23 donnée sont espacés entre eux (sur une surface opposée ou adjacente de la pièce 21, 22, 23) au moins de la distance inter-orifices.

Le contour de chaque orifice 213, 223, 233 d'une pièce 21, 22, 23 donnée est espacé (sur une surface opposée ou adjacente de la pièce 21, 22, 23) du bord de la pièce 21, 22, 23 dans laquelle il est réalisé au moins d'une distance orifice-bord.

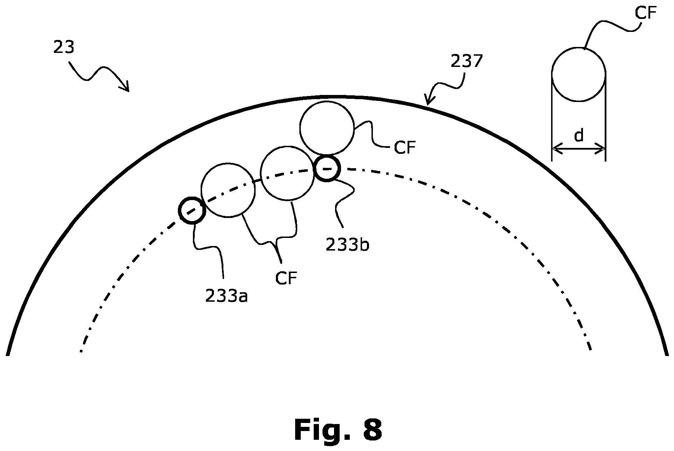

On définit une distance d'étanchéité « d » telle que la distance inter-orifices est de préférence supérieure à deux fois cette distance d'étanchéité et telle que la distance orifice-bord est de préférence supérieure à cette distance d'étanchéité (voir figure 8). La distance d'étanchéité est déterminée en fonction du périmètre (ou du diamètre) d'un orifice à isoler ainsi que de la pression appliquée sur cet orifice par le fluide qu'il contient. Cette distance d'étanchéité est de préférence supérieure à 2 mm, de préférence supérieure à 2,4 mm. Ces plages de valeurs pour la distance d'étanchéité assurent notamment une bonne étanchéité de la vanne pour une pression de fluide dans la vanne d'environ 1,5 bars et un diamètre des orifices inférieur à 0,5 mm.

La distance d'étanchéité « d » est représentée en figure 8 par le diamètre d'un cercle fictif CF. La figure 8 est une vue partielle de la pièce interne 23 sur laquelle sont représentés deux orifices 233a, 233b. Trois cercles fictifs CF sont placés de manière tangente à ces orifices 233a, 233b indiquant que ladite distance inter-orifices et ladite distance orifice-bord (ce bord de la pièce 23 portant la référence 237) sont supérieures à la distance d'étanchéité, c'est-à-dire au diamètre du cercle fictif CF.

Une telle caractéristique permet d'isoler chaque canal, en particulier lors d'un changement de position des pièces rotatives 21, 22, par exemple depuis une position de prélèvement jusqu'à une position de dispense. Ainsi, la distance d'étanchéité permet d'éviter les fuites de liquide, à la fois dans une position donnée des pièces rotatives 21, 22 et lorsque ces pièces rotatives 21, 22 sont mises en rotation.

Un avantage important de la vanne selon l'invention est qu'elle permet d'assurer un bon fonctionnement sans réaliser des rainures ou creusures (ou chicanes de renvoi d'aliquote). La présence de creusures implique de rincer celles-ci dans chacun des états décrits ci-dessus. L'absence de creusure permet au contraire de réaliser le rinçage dans un et un seul de ces états, et de simplifier par conséquent le circuit hydraulique. Le rinçage peut être réalisé dans la position des pièces de la vanne correspondant à l'état de prélèvement.

La vanne selon l'invention permet aussi de réaliser le rinçage de manière exhaustive et dans un ordre précis allant du réactif le moins corrosif au réactif le plus corrosif.

## Revendications

1. Vanne d'échantillonnage comprenant deux pièces externes (21, 22), une pièce interne (23) enserrée entre lesdites pièces externes (21, 22), et des moyens (3) pour régler la position angulaire relative desdites pièces (21, 22, 23) autour d'un axe de rotation (A), ladite pièce interne (23) ayant des surfaces opposées (231, 232) appuyées de façon étanche et glissante sur des surfaces (211, 221) adjacentes desdites pièces externes (21, 22), lesdites pièces externes (21, 22) comprenant des orifices (213), des boucles (219, 229) et des canaux (218, 228), lesdites boucles (219, 229) et lesdits canaux (218, 228) étant agencés pour communiquer sélectivement avec des orifices (233) traversant ladite pièce interne (23), **caractérisée en ce que** deux (21, 22) desdites pièces (21, 22, 23) sont rotatives autour dudit axe de rotation (A) par rapport à l'une (23) desdites pièces (21, 22, 23) qui est fixe, **caractérisée en ce que** la position angulaire des pièces rotatives (21, 22) est commandée par un actionneur linéaire (3) dont la partie mobile en translation est solidaire d'une partie centrale d'un étrier d'actionnement qui est en prise avec lesdites pièces rotatives (21, 22) en des points différents autour de l'axe de rotation (A).

2. Vanne d'échantillonnage selon la revendication précédente, **caractérisée en ce que** les deux pièces rotatives autour de l'axe de rotation (A) sont les deux pièces externes (21, 22).

3. Vanne d'échantillonnage selon la revendication 1 ou 2, **caractérisée en ce que** les pièces rotatives (21, 22) peuvent être actionnées simultanément.

4. Vanne d'échantillonnage selon la revendication précédente, **caractérisée en ce que** les pièces rotatives (21, 22) peuvent être simultanément actionnées dans des sens de rotation (S1, S2) opposés.

5. Vanne d'échantillonnage selon la revendication précédente, **caractérisée en ce que** les moyens de transmission comprennent un étrier dont une partie centrale est reliée à l'actionneur linéaire (3), ledit étrier comprenant deux bras, chaque bras (32, 33) dudit étrier étant relié à l'une respective des pièces rotatives (21, 22).

6. Vanne d'échantillonnage selon la revendication précédente, **caractérisée en ce qu'**une première extrémité de chaque bras (32, 33) est solidaire d'une partie mobile en translation de l'actionneur linéaire (3), et **en ce qu'**une deuxième extrémité de chaque bras (32, 33) est en prise avec une seule des pièces rotatives (21, 22).

7. Vanne d'échantillonnage selon la revendication précédente, **caractérisée en ce que** la deuxième extrémité respective de chaque bras (32, 33) de l'étrier est en prise avec une pièce rotative respective (32, 33) de sorte que l'étrier enserre les pièces rotatives (32, 33) de manière à entraîner les pièces rotatives (32, 33) en rotation par déplacement en translation de la partie mobile de l'actionneur linéaire (3).

8. Vanne d'échantillonnage selon l'une quelconque des revendications précédentes, **caractérisée en ce que** dans l'une au moins des positions angulaires relatives, des moyens de butée définissent la position angulaire des pièces rotatives (21, 22), lesdits moyens de butée comprenant de préférence un élément de butée (6) qui s'étend axialement dans des lumières (215, 225) traversant les pièces rotatives (21, 22) avec un jeu angulaire autour de l'axe de rotation (A).

9. Vanne d'échantillonnage selon l'une quelconque des revendications précédentes dans laquelle les pièces (21, 22, 23) sont agencées pour permettre, par une rotation relative, de passer
d'un état fonctionnel de prélèvement (Ep), dans lequel des volumes calibrés de liquide prélevé sont isolés,
à un état fonctionnel de dispense (Ed) dans lequel ces volumes calibrés sont mis en liaison avec des circuits de dispense,
**caractérisée en ce que** certains desdits volumes calibrés sont définis dans une ou plusieurs boucles (b) et calibrées par la contenance desdites une ou plusieurs boucles (b) et d'autres volumes calibrés sont définis dans un ou plusieurs orifices (23o3) de la pièce interne (23) et calibrées par la contenance desdits un ou plusieurs orifices (22o3) de ladite pièce interne (23).

10. Vanne d'échantillonnage selon l'une quelconque des revendications 1 à 8, **caractérisée en ce que** les orifices (213, 223), les boucles (219, 229) et les canaux (218, 228) des pièces externes (21, 22), et les orifices (233) traversant la pièce interne (23) sont agencés pour que, par leurs positions angulaires relatives :
- dans un état de prélèvement (Ep) ou de rinçage (Er), plusieurs (b) desdites boucles sont reliées, par plusieurs (23o1) desdits orifices de ladite pièce interne (23) et plusieurs (21o1, 22o1) desdits orifices desdites pièces externes (21, 22), à au moins un canal d'entrée (ce1) et à au moins un canal de sortie (cs1) ; et
- dans au moins un état de dispense (Ed), une série de boucles (b) sont des boucles d'échantillonnage de volume calibré et sont reliées, chacune séparément, par plusieurs (23o2) desdits orifices de ladite pièce interne (23) et plusieurs (21o2, 22o2) desdits orifices desdites pièces externes (21, 22), à au moins un canal d'entrée (ce2) et à au moins un canal de sortie (cs2).

11. Vanne d'échantillonnage selon l'une quelconque des revendications 1 à 8, **caractérisée en ce que** les orifices (213, 223), les boucles (219, 229) et les canaux (218, 228) des pièces externes (21, 22), et les orifices (233) traversant la pièce interne (23) sont agencés pour que, par leurs positions angulaires relatives :
- dans un état de prélèvement (Ep) ou de rinçage (Er), plusieurs (b) desdites boucles sont reliées, par plusieurs (23o1) desdits orifices de ladite pièce interne (23) et plusieurs (21o1, 22o1) desdits orifices desdites pièces externes (21, 22), à au moins un canal d'entrée (ce1) et à au moins un canal de sortie (cs1) ; et
- dans un état de dispense (Ed), au moins un (22o3) desdits orifices de ladite pièce interne (23) est une chambre d'échantillonnage de volume calibré et est directement relié, par des orifices (21o3, 22o3) desdites pièces externes (21, 22), à au moins un canal d'entrée (ce3) et à au moins un canal de sortie (cs3).

12. Vanne d'échantillonnage selon la revendication 10, **caractérisée en ce que** les orifices (213, 223), les boucles (219, 229) et les canaux (218, 228) des pièces externes (21, 22), et les orifices (233) traversant la pièce interne (23) sont agencés pour que, dans un état de dispense secondaire (Ed2'), une deuxième série (b2') desdites boucles
sont des boucles d'échantillonnage de volume calibré et
sont reliées, chacune séparément, par plusieurs (23o2b') desdits orifices de ladite pièce interne (23) et plusieurs (21o2b', 22o2b') desdits orifices desdites pièces externes (21, 22), à au moins un canal d'entrée (ce2b') et à au moins un canal de sortie (cs2b').

13. Vanne d'échantillonnage selon la revendication 11 ou 12, **caractérisée en ce que** les orifices (213, 223), les boucles (219, 229) et les canaux (218, 228) des pièces externes (21, 22), et les orifices (233) traversant la pièce interne (23) sont agencés pour que, dans un état de dispense secondaire (Ed2') au moins un desdits orifices de ladite pièce interne (23) est directement relié, par des orifices desdites pièces externes (21, 22), à au moins un canal d'entrée et à au moins un canal de sortie, ledit au moins un desdits orifices de ladite pièce interne (23) étant une chambre d'échantillonnage de volume calibré.

14. Vanne d'échantillonnage selon la revendication 12 ou 13, **caractérisée en ce que** les pièces externes (21, 22) sont aptes à être actionnées de façon sélective de sorte que :
- lesdites pièces externes (21, 22) se déplacent dans un sens de rotation opposé ; ou
- l'une desdites pièces externes (21, 22) se déplace dans un sens de rotation suivant l'axe de rotation (A) et l'autre desdites pièces externes (21, 22) ne se déplace pas en rotation suivant ledit axe de rotation (A).

15. Vanne d'échantillonnage selon l'une quelconque des revendications 12 à 14, **caractérisée en ce que** les orifices (213, 223), les boucles (219, 229) et les canaux (218, 228) des pièces externes (21, 22), et les orifices (233) traversant la pièce interne (23) sont agencés pour définir, par leurs positions angulaires relatives :
- ledit état de prélèvement précité en tant qu'état de prélèvement primaire (Ep1"), et en outre
- un état de prélèvement secondaire (Ep2") ou de rinçage secondaire (Er2") dans lequel plusieurs (b2") desdites boucles, dont certaines sont communes avec lesdites boucles dudit état de prélèvement primaire (Ep1"), sont reliées, par plusieurs (23o2") desdits orifices de ladite pièce interne (23) et plusieurs (21o2", 22o2") desdits orifices desdites pièces externes (21, 22), à au moins un canal d'entrée (ce2") et à au moins un canal de sortie (cs2").

16. Vanne d'échantillonnage selon la revendication précédente, **caractérisée en ce que** les pièces externes (21, 22) sont aptes à être actionnées de façon sélective de sorte que :
- lesdites pièces externes (21, 22) se déplacent dans un sens de rotation identique ; ou
- lesdites pièces externes (21, 22) se déplacent dans un sens de rotation opposé ; ou
- l'une desdites pièces externes (21, 22) se déplace dans un sens de rotation suivant l'axe de rotation (A) et l'autre desdites pièces externes (21, 22) ne se déplace pas en rotation suivant ledit axe de rotation (A).

17. Vanne d'échantillonnage selon la revendication 10, 12 ou 15, **caractérisée en ce que**, dans l'état de dispense (Ed) ou respectivement l'un au moins des états de dispense, au moins un (23o3) des orifices de la pièce interne (23) est directement relié, par des orifices (21o3, 22o3) des pièces externes (21, 22), à au moins un canal d'entrée (ce3) et à au moins un canal de sortie (cs3), et dans lequel ledit au moins un (23o3) desdits orifices de ladite pièce interne (23) est une chambre d'échantillonnage de volume calibré.

18. Dispositif d'analyse de paramètres biologiques compenant au moins une vanne d'échantillonnage selon l'une quelconque des revendications précédentes.

19. Procédé d'échantillonnage comprenant une mise en œuvre d'une vanne d'échantillonnage selon l'une quelconque des revendications 1 à 17.

## Patentansprüche

1. Probeentnahmeventil, welches zwei äußere Teile (21, 22), ein inneres Teil (23), das zwischen den äußeren Teilen (21, 22) eingeklemmt ist, und Mittel (3) zum Regeln der relativen Winkelposition der Teile (21, 22, 23) um eine Drehachse (A) umfasst, wobei das innere Teil (23) einander gegenüberliegende Flächen (231, 232) aufweist, die dicht und gleitend an angrenzenden Flächen (211, 221) der äußeren Teile (21, 22) anliegen, wobei die äußeren Teile (21, 22) Öffnungen (213), Bügelelemente (219, 229) und Kanäle (218, 228) umfassen, wobei die Bügelelemente (219, 229) und die Kanäle (218, 228) dafür ausgelegt sind, selektiv mit Öffnungen (233) zu kommunizieren, die das innere Teil (23) durchqueren, **dadurch gekennzeichnet, dass** zwei (21, 22) der Teile (21, 22, 23) um die Drehachse (A) in Bezug auf eines (23) der Teile (21, 22, 23), welches feststehend ist, drehbar sind, **dadurch gekennzeichnet, dass** die Winkelposition der drehbaren Teile (21, 22) von einem Linearantrieb (3) gesteuert wird, dessen translationsbeweglicher Teil mit einem mittleren Teil eines Betätigungsbügels fest verbunden ist, welcher mit den drehbaren Teilen (21, 22) in verschiedenen Punkten um die Drehachse (A) herum in Eingriff steht.

2. Probeentnahmeventil nach dem vorhergehenden Anspruch, **dadurch gekennzeichnet, dass** die zwei um die Drehachse (A) drehbaren Teile die zwei äußeren Teile (21, 22) sind.

3. Probeentnahmeventil nach Anspruch 1 oder 2, **dadurch gekennzeichnet, dass** die drehbaren Teile (21, 22) gleichzeitig betätigt werden können.

4. Probeentnahmeventil nach dem vorhergehenden Anspruch, **dadurch gekennzeichnet, dass** die drehbaren Teile (21, 22) gleichzeitig in entgegengesetzten Drehrichtungen (S1, S2) betätigt werden können.

5. Probeentnahmeventil nach dem vorhergehenden Anspruch, **dadurch gekennzeichnet, dass** die Übertragungsmittel einen Bügel umfassen, von dem ein mittlerer Teil mit dem Linearantrieb (3) verbunden ist, wobei der Bügel zwei Arme umfasst, wobei jeder Arm (32, 33) des Bügels mit einem jeweiligen der drehbaren Teile (21, 22) verbunden ist.

6. Probeentnahmeventil nach dem vorhergehenden Anspruch, **dadurch gekennzeichnet, dass** ein erstes Ende jedes Armes (32, 33) mit einem translationsbeweglichen Teil des Linearantriebs (3) fest verbunden ist, und dadurch, dass ein zweites Ende jedes Armes (32, 33) mit nur einem der drehbaren Teile (21, 22) in Eingriff steht.

7. Probeentnahmeventil nach dem vorhergehenden Anspruch, **dadurch gekennzeichnet, dass** das jeweilige zweite Ende jedes Armes (32, 33) des Bügels mit einem jeweiligen drehbaren Teil (32, 33) in Eingriff steht, derart, dass der Bügel die drehbaren Teile (32, 33) festklemmt, um die drehbaren Teile (32, 33) durch translatorische Bewegung des beweglichen Teils des Linearantriebs (3) drehen anzutreiben.

8. Probeentnahmeventil nach einem der vorhergehenden Ansprüche, **dadurch gekennzeichnet, dass** in wenigstens einer der relativen Winkelpositionen Anschlagmittel die Winkelposition der drehbaren Teile (21, 22) definieren, wobei die Anschlagmittel vorzugsweise ein Anschlagelement (6) umfassen, welches sich axial in Löchern (215, 225) erstreckt, welche die drehbaren Teile (21, 22) durchqueren, mit einem Winkelspiel um die Drehachse (A).

9. Probeentnahmeventil nach einem der vorhergehenden Ansprüche, wobei die Teile (21, 22, 23) dafür ausgelegt sind zu ermöglichen, durch eine relative Drehung überzugehen
von einem Funktionszustand der Entnahme (Ep), in welchem kalibrierte Volumina entnommener Flüssigkeit isoliert sind,
zu einem Funktionszustand der Abgabe (Ed), in welchem diese kalibrierten Volumina mit Abgabekreisen in Verbindung gebracht werden,
**dadurch gekennzeichnet, dass** einige der kalibrierten Volumina in einem oder mehreren Bügelelementen (b) definiert sind und durch das Fassungsvermögen der ein oder mehreren Bügelelemente (b) kalibriert sind und andere kalibrierte Volumina in einer oder mehreren Öffnungen (23o3) des inneren Teils (23) definiert sind und durch das Fassungsvermögen der ein oder mehreren Öffnungen (23o3) des inneren Teils (23) kalibriert sind.

10. Probeentnahmeventil nach einem der Ansprüche 1 bis 8, **dadurch gekennzeichnet, dass** die Öffnungen (213, 223), die Bügelelemente (219, 229) und die Kanäle (218, 228) der äußeren Teile (21, 22) und die Öffnungen (233), die das innere Teil (23) durchqueren, dafür ausgelegt sind, dass durch ihre relativen Winkelpositionen:
- in einem Zustand der Entnahme (Ep) oder der Spülung (Er) mehrere (b) der Bügelelemente über mehrere (23o1) der Öffnungen des inneren Teils (23) und mehrere (21o1, 22o1) der Öffnungen der äußeren Teile (21, 22) mit wenigstens einem Eintrittskanal (ce1) und mit wenigstens einem Austrittskanal (cs1) verbunden sind; und
- in wenigstens einem Zustand der Abgabe (Ed) eine Reihe von Bügelelementen (b) Bügelelemente zur Probeentnahme mit kalibriertem Volumen sind und, jedes für sich getrennt, über mehrere (23o2) der Öffnungen des inneren Teils (23) und mehrere (21o2, 22o2) der Öffnungen der äußeren Teile (21, 22) mit wenigstens einem Eintrittskanal (ce2) und mit wenigstens einem Austrittskanal (cs2) verbunden sind.

11. Probeentnahmeventil nach einem der Ansprüche 1 bis 8, **dadurch gekennzeichnet, dass** die Öffnungen (213, 223), die Bügelelemente (219, 229) und die Kanäle (218, 228) der äußeren Teile (21, 22) und die Öffnungen (233), die das innere Teil (23) durchqueren, dafür ausgelegt sind, dass durch ihre relativen Winkelpositionen:
- in einem Zustand der Entnahme (Ep) oder der Spülung (Er) mehrere (b) der Bügelelemente über mehrere (23o1) der Öffnungen des inneren Teils (23) und mehrere (21o1, 22o1) der Öffnungen der äußeren Teile (21, 22) mit wenigstens einem Eintrittskanal (ce1) und mit wenigstens einem Austrittskanal (cs1) verbunden sind; und
- in einem Zustand der Abgabe (Ed) wenigstens eine (22o3) der Öffnungen des inneren Teils (23) eine Probeentnahmekammer mit kalibriertem Volumen ist und über Öffnungen (21o3, 22o3) der äußeren Teile (21, 22) direkt mit wenigstens einem Eintrittskanal (ce3) und mit wenigstens einem Austrittskanal (cs3) verbunden ist.

12. Probeentnahmeventil nach Anspruch 10, **dadurch gekennzeichnet, dass** die Öffnungen (213, 223), die Bügelelemente (219, 229) und die Kanäle (218, 228) der äußeren Teile (21, 22) und die Öffnungen (233), die das innere Teil (23) durchqueren, dafür ausgelegt sind, dass in einem Zustand der sekundären Abgabe (Ed2') eine zweite Reihe (b2') der Bügelelemente
Bügelelemente zur Probeentnahme mit kalibriertem Volumen sind und,
jedes für sich getrennt, über mehrere (23o2b') der Öffnungen des inneren Teils (23) und mehrere (21o2b', 22o2b') der Öffnungen der äußeren Teile (21, 22) mit wenigstens einem Eintrittskanal (ce2b') und mit wenigstens einem Austrittskanal (cs2b') verbunden sind.

13. Probeentnahmeventil nach Anspruch 11 oder 12, **dadurch gekennzeichnet, dass** die Öffnungen (213, 223), die Bügelelemente (219, 229) und die Kanäle (218, 228) der äußeren Teile (21, 22) und die Öffnungen (233), die das innere Teil (23) durchqueren, dafür ausgelegt sind, dass in einem Zustand der sekundären Abgabe (Ed2') wenigstens eine der Öffnungen des inneren Teils (23) über Öffnungen der äußeren Teile (21, 22) direkt mit wenigstens einem Eintrittskanal und mit wenigstens einem Austrittskanal verbunden ist, wobei die wenigstens eine der Öffnungen des inneren Teils (23) eine Probeentnahmekammer mit kalibriertem Volumen ist.

14. Probeentnahmeventil nach Anspruch 12 oder 13, **dadurch gekennzeichnet, dass** die äußeren Teile (21, 22) auf selektive Weise derart betätigbar sind, dass:
- die äußeren Teile (21, 22) sich in einer entgegengesetzten Drehrichtung bewegen; oder
- eines der äußeren Teile (21, 22) sich in einer Drehrichtung um die Drehachse (A) bewegt und das andere der äußeren Teile (21, 22) sich nicht um die Drehachse (A) drehend bewegt.

15. Probeentnahmeventil nach einem der Ansprüche 12 bis 14, **dadurch gekennzeichnet, dass** die Öffnungen (213, 223), die Bügelelemente (219, 229) und die Kanäle (218, 228) der äußeren Teile (21, 22) und die Öffnungen (233), die das innere Teil (23) durchqueren, dafür ausgelegt sind, durch ihre relativen Winkelpositionen zu definieren:
- den oben genannten Zustand der Entnahme als primären Zustand der Entnahme (Ep1") und außerdem
- einen sekundären Zustand der Entnahme (Ep2") oder sekundären Zustand der Spülung (Er2"), in welchem mehrere (b2") der Bügelelemente, von denen einige zugleich Bügelelemente des primären Zustands der Entnahme (Ep1") sind, über mehrere (23o2") der Öffnungen des inneren Teils (23) und mehrere (21o2", 22o2") der Öffnungen der äußeren Teile (21, 22) mit wenigstens einem Eintrittskanal (ce2") und mit wenigstens einem Austrittskanal (cs2") verbunden sind.

16. Probeentnahmeventil nach dem vorhergehenden Anspruch, **dadurch gekennzeichnet, dass** die äußeren Teile (21, 22) auf selektive Weise derart betätigbar sind, dass:
- die äußeren Teile (21, 22) sich in einer identischen Drehrichtung bewegen; oder
- die äußeren Teile (21, 22) sich in einer entgegengesetzten Drehrichtung bewegen; oder
- eines der äußeren Teile (21, 22) sich in einer Drehrichtung um die Drehachse (A) bewegt und das andere der äußeren Teile (21, 22) sich nicht um die Drehachse (A) drehend bewegt.

17. Probeentnahmeventil nach Anspruch 10, 12 oder 15, **dadurch gekennzeichnet, dass** im Zustand der Abgabe (Ed) bzw. in wenigstens einem der Zustände der Abgabe wenigstens eine (22o3) der Öffnungen des inneren Teils (23) über Öffnungen (21o3, 22o3) der äußeren Teile (21, 22) direkt mit wenigstens einem Eintrittskanal (ce3) und mit wenigstens einem Austrittskanal (cs3) verbunden ist, und wobei die wenigstens eine (22o3) der Öffnungen des inneren Teils (23) eine Probeentnahmekammer mit kalibriertem Volumen ist.

18. Vorrichtung zur Analyse biologischer Parameter, welche wenigstens ein Probeentnahmeventil nach einem der vorhergehenden Ansprüche umfasst.

19. Verfahren zur Probeentnahme, welches einen Einsatz eines Probeentnahmeventils nach einem der Ansprüche 1 bis 17 umfasst.

## Claims

1. Sampling valve comprising two external parts (21, 22), one internal part (23) clamped between said external parts (21, 22), and means (3) for adjusting the relative angular position of said parts (21, 22, 23) about an axis of rotation (A), said internal part (23) having opposite surfaces (231, 232) bearing in a fluid tight and sliding fashion against adjacent surfaces (211, 221) of said external parts (21, 22), said external parts (21, 22) comprising orifices (213), loops (219, 229) and ducts (218, 228), said loops (219, 229) and said ducts (218, 228) being configured to communicate selectively with orifices (233) passing through said internal part (23), **characterized in that** two (21, 22) of said parts (21, 22, 23) are able to rotate about said axis of rotation (A) with respect to the one (23) of said parts (21, 22, 23) which is stationary, **characterized in that** the angular position of the rotary parts (21, 22) is controlled by a linear actuator (3) of which the translationally mobile part is secured to a central part of an actuating yoke which is engaged with said rotary parts (21, 22) at different points about the axis of rotation (A).

2. Sampling valve according to the preceding claim, **characterized in that** the two parts able to rotate about the axis of rotation (A) are the two external parts (21, 22).

3. Sampling valve according to Claim 1 or 2, **characterized in that** the rotary parts (21, 22) may be actuated simultaneously.

4. Sampling valve according to the preceding claim, **characterized in that** the rotary parts (21, 22) may be actuated simultaneously in opposite directions of rotation (S1, S2).

5. Sampling valve according to the preceding claim, **characterized in that** the transmission means comprise a yoke of which a central part is connected to the linear actuator (3), said yoke comprising two arms, each arm (32, 33) of said yoke being connected to a respective one of the rotary parts (21, 22).

6. Sampling valve according to the preceding claim, **characterized in that** a first end of each arm (32, 33) is secured to a translationally mobile part of the linear actuator (3), and **in that** a second end of each arm (32, 33) is engaged with just one of the rotary parts (21, 22).

7. Sampling valve according to the preceding claim, **characterized in that** the second respective end of each arm (32, 33) of the yoke is engaged with a respective rotary part (32, 33) such that the yoke grips the rotary parts (32, 33) in such a way as to drive the rotary parts (32, 33) in rotation through a translational movement of the mobile part of the linear actuator (3).

8. Sampling valve according to any one of the preceding claims, **characterized in that**, in at least one of the relative angular positions, end-stop means define the angular position of the rotary parts (21, 22), said end-stop means preferably comprising an end-stop element (6) which extends axially into ports (215, 225) passing through the rotary parts (21, 22) with an angular clearance about the axis of rotation (A).

9. Sampling valve according to any one of the preceding claims, in which the parts (21, 22, 23) are configured so as to allow, through a relative rotation, a transition
from a functional sample-withdrawing state (Ep), in which calibrated volumes of withdrawn liquid are isolated,
to a functional dispensing state (Ed) in which these calibrated volumes are placed in communication with dispensing circuits,
**characterized in that** some of said calibrated volumes are defined in one or several loops (b) and calibrated by the capacity of said one or several loops (b) and other calibrated volumes are defined in one or several orifices (23o3) of the internal part (23) and calibrated by the capacity of said one or several orifices (22o3) of said internal part (23).

10. Sampling valve according to any one of Claims 1 to 8, **characterized in that** the orifices (213, 223), the loops (219, 229) and the ducts (218, 228) of the external parts (21, 22), and the orifices (233) passing through the internal part (23) are configured so that, through their relative angular positions:
- in a sample-withdrawing state (Ep) or rinsing state (Er), several (b) of said loops are connected, by several (23o1) of said orifices of said internal part (23) and several (21o1, 22o1) of said orifices of said external parts (21, 22), to at least one inlet duct (ce1) and to at least one outlet duct (cs1); and
- in at least one dispensing state (Ed), a series of loops (b) are sampling loops of calibrated volume and are connected, each one separately, by several (23o2) of said orifices of said internal part (23) and several (21o2, 22o2) of said orifices of said external parts (21, 22), to at least one inlet duct (ce2) and to at least one outlet duct (cs2).

11. Sampling valve according to any one of Claims 1 to 8, **characterized in that** the orifices (213, 223), the loops (219, 229) and the ducts (218, 228) of the external parts (21, 22), and the orifices (233) passing through the internal part (23) are configured so that, through their relative angular positions:
- in a sample-withdrawing state (Ep) or rinsing state (Er), several (b) of said loops are connected, by several (23o1) of said orifices of said internal part (23) and several (21o1, 22o1) of said orifices of said external parts (21, 22), to at least one inlet duct (ce1) and to at least one outlet duct (cs1); and
- in a dispensing state (Ed), at least one (22o3) of said orifices of said internal part (23) is a sampling chamber of calibrated volume and is directly connected, via orifices (21o3, 22o3) of said external parts (21, 22), to at least one inlet duct (ce3) and to at least one outlet duct (cs3).

12. Sampling valve according to Claim 10, **characterized in that** the orifices (213, 223), the loops (219, 229) and the ducts (218, 228) of the external parts (21, 22), and the orifices (233) passing through the internal part (23) are configured so that, in a secondary dispensing state (Ed2'), a second series (b2') of said loops
are sampling loops of calibrated volume, and
are connected, each one separately, by several (23o2b') of said orifices of said internal part (23) and several (21o2b', 22o2b') of said orifices of said external parts (21, 22), to at least one inlet duct (ce2b') and to at least one outlet duct (cs2b').

13. Sampling valve according to Claim 11 or 12, **characterized in that** the orifices (213, 223), the loops (219, 229) and the ducts (218, 228) of the external parts (21, 22), and the orifices (233) passing through the internal part (23) are configured so that, in a secondary dispensing state (Ed2') at least one of said orifices of said internal part (23) is directly connected, via orifices of said external parts (21, 22), to at least one inlet duct and to at least one outlet duct, said at least one of said orifices of said internal part (23) being a sampling chamber of calibrated volume.

14. Sampling valve according to Claim 12 or 13, **characterized in that** the external parts (21, 22) are able to be actuated selectively so that:
- said external parts (21, 22) move in opposite directions of rotation; or
- one of said external parts (21, 22) moves in a direction of rotation about the axis of rotation (A) and the other of said external parts (21, 22) does not move in rotation about said axis of rotation (A).

15. Sampling valve according to any one of Claims 12 to 14, **characterized in that** the orifices (213, 223), the loops (219, 229) and the ducts (218, 228) of the external parts (21, 22), and the orifices (233) passing through the internal part (23) are configured so as to define, through their relative angular positions:
- said aforementioned sample-withdrawing state by way of primary sample-withdrawing state (Ep1"), and also
- a secondary sample-withdrawing state (Ep2'') or secondary rinsing state (Er2'') in which several (b2'') of said loops, some of which are common to said loops of said primary sample-withdrawing state (Ep1"), are connected, by several (23o2'') of said orifices of said internal part (23) and several (21o2", 22o2'') of said orifices of said external parts (21, 22), to at least one inlet duct (ce2'') and to at least one outlet duct (cs2'').

16. Sampling valve according to the preceding claim, **characterized in that** the external parts (21, 22) are able to be actuated selectively so that:
- said external parts (21, 22) move in the same direction of rotation; or
- said external parts (21, 22) move in opposite directions of rotation; or
- one of said external parts (21, 22) moves in a direction of rotation about the axis of rotation (A) and the other of said external parts (21, 22) does not move in rotation about said axis of rotation (A).

17. Sampling valve according to Claim 10, 12 or 15, **characterized in that**, in the dispensing state (Ed) or, respectively, at least one of the dispensing states, at least one (23o3) of the orifices of the internal part (23) is connected directly, via orifices (21o3, 22o3) of the external parts (21, 22), to at least one inlet duct (ce3) and to at least one outlet duct (cs3), and in which said at least one (23o3) of said orifices of said internal part (23) is a sampling chamber of calibrated volume.

18. Device for analyzing biological parameters comprising at least one sampling valve according to any one of the preceding claims.

19. Sampling method involving use of a sampling valve according to any one of Claims 1 to 17.
